# EUROPÄISCHE PATENTSCHRIFT

(11) **EP 4 227 539 B1**
(45) Veröffentlichungstag und Bekanntmachung des Hinweises auf die Patenterteilung: **30.07.2025**
(21) Anmeldenummer: 23179789.5
(22) Anmeldetag: 16.06.2023
(51) Int. Cl.: F04D 19/04, F04D 29/053, F04D 29/059, F04D 29/063, F16C 33/66

(54) **VAKUUMPUMPE**
VACUUM PUMP
POMPE A VIDE

(43) Veröffentlichungstag der Anmeldung: 16.08.2023
(73) Patentinhaber: Pfeiffer Vacuum Technology AG, 35614 Asslar (DE)
(72) Erfinder: Gogol, Torsten, 35630 Ehringshausen (DE)
(74) Vertreter: Manitz Finsterwald Patent- und Rechtsanwaltspartnerschaft mbB

(56) Entgegenhaltungen:
- DE-B4- 102015 111 049
- US-A- 4 674 952
- US-B2- 11 111 927

## Beschreibung

Die Erfindung betrifft eine Vakuumpumpe mit einer Rotorwelle, die pumpaktive Elemente eines Rotors der Vakuumpumpe trägt, und mit zumindest einem Lager, an welchem die Rotorwelle drehbar gelagert ist.

Wenn eine Vakuumkammer mittels einer Vakuumpumpe evakuiert werden soll, kann es erforderlich sein, die Vakuumpumpe an einer bestimmten Position und in einer bestimmten räumlichen Lage bezüglich der Vakuumkammer zu installieren. Diese Position kann beispielsweise durch den vorhandenen Bauraum im Bereich der Vakuumkammer vorgegeben sein. Wenn die Vakuumpumpe einen Rotor mit einer bestimmten Drehachse und einen Stator aufweist, kann es dementsprechend erforderlich sein, dass die Vakuumpumpe sowohl in einer Lage mit horizontaler Drehachse des Rotors als auch in einer Lage mit vertikaler Drehachse des Rotors sowie möglicherweise in weiteren Lagen zwischen diesen betrieben werden kann.

Der Rotor einer Vakuumpumpe weist üblicherweise eine Rotorwelle auf, für die eine Lagerung erforderlich ist. Diese Lagerung erfolgt an mindestens zwei Lagerstellen, die sich beispielsweise im Bereich jeweiliger Enden der Rotorwelle befinden. Neben Magnetlagern, die überwiegend auf einer Hochvakuumseite von Turbomolekularpumpen verwendet werden, werden zur Lagerung von Rotorwellen der Vakuumpumpen häufig Kugellager eingesetzt, da diese kostengünstiger als Magnetlager sind.

Die Bedingungen, unter denen die Vakuumpumpe betrieben werden soll, müssen jedoch die Verwendung eines Kugellagers zulassen. Zu diesen Bedingungen gehört beispielsweise der zu erreichende Enddruck bzw. minimale Druck in der Vakuumkammer, der ein bestimmtes Saugvermögen der Vakuumpumpe und damit eine bestimmte Pumpenkonstruktion bzw. einen bestimmten Pumpentyp bedingt, sowie Anforderungen bezüglich der Ölfreiheit des Vakuums innerhalb der Vakuumkammer. Da Kugellager mit einem Schmiermittel wie etwa Öl geschmiert werden müssen, bestehen gewisse Grenzen für den Einsatz von Kugellagern innerhalb von Vakuumpumpen. Eine Migration des Schmiermittels aus einem Kugellager in ein Pumpsystem, d. h. in den Bereich pumpaktiver Elemente der Vakuumpumpe, ist jedoch in jedem Fall während des Betriebs der Vakuumpumpe zu vermeiden.

Wenn die Vakuumpumpe mit vertikal ausgerichteter Drehachse des Rotors betrieben werden soll und zur Lagerung der Rotorwelle ein Kugellager an deren oberem Ende vorgesehen ist, kann das Schmiermittel bzw. Öl aus dem Kugellager in den darunter liegenden Bereich der Rotorwelle gelangen. Beispielsweise kann Öl aus dem Kugellager auf eine unter dem Kugellager liegende plane Fläche einer Rotorwelle tropfen, wenn sich die Vakuumpumpe im Stillstand befindet. Für den Betrieb der Vakuumpumpe sind hingegen Einrichtungen zur Rückführung des Öls in das Kugellager vorgesehen, wie beispielsweise Rückholfilze. Durch die Drehung des Rotors im Betrieb der Vakuumpumpe wird das Öl von der planen Fläche der Rotorwelle gegen einen solchen Rückholfilz geschleudert und durch dessen kapillare Wirkung zum Kugellager zurückgeführt.

Wenn Öl jedoch während des Stillstands der Vakuumpumpe aus dem Kugellager auf die darunterliegende plane Fläche der Rotorwelle tropft, sollte dieses Öl bei einer erneuten Inbetriebnahme der Vakuumpumpe ebenso in den Rückholfilz geschleudert werden und nicht von der planen Fläche weiter in den pumpaktiven Bereich der Vakuumpumpe gelangen. Dies ist jedoch nur für eine geringe Menge des Öls oder eines anderen Schmiermittels möglich. Wenn ferner die räumliche Lage der Vakuumpumpe nach deren Abschalten verändert wird, kann das Öl bzw.

Schmiermittel aus dem Kugellager unbeabsichtigt von der planen Fläche der Rotorwelle weiter in das Innere der Vakuumpumpe gelangen. Bei Vakuumpumpen mit vertikaler Einbaulage der Rotorwelle und mit Kugellagern kann daher das Problem auftreten, dass eine unbeabsichtigte Migration des Öls bzw. Schmiermittels aus einem der Kugellager in das Pumpsystem der Vakuumpumpe erfolgt.

Aus der US 4 674 952 A ist eine Vakuumpumpe mit den Merkmalen gemäß dem jeweiligen Oberbegriff der unabhängigen Ansprüche bekannt.

Die DE 10 2015 111 049 B4 beschreibt eine ähnliche Vakuumpumpe, bei der jedoch eine Rotorwelle Zapfen aufweist, die sich konisch erweitern und einer Ölpumpe zugeordnet sind, um ein Lager der Rotorwelle mit Öl zu schmieren.

In der US 11 111 927 B2 ist ebenfalls eine ähnliche Vakuumpumpe beschrieben, bei der eine Rotorwelle jedoch keine Ausnehmung aufweist, sondern mit einem Deflektor versehen ist, der ein Schmiermittel in einen Aufnahmekanal ablenkt und dadurch eine Bohrung der Rotorwelle vor Schmiermittel schützt.

Eine Aufgabe der Erfindung besteht darin, eine Vakuumpumpe der eingangs genannten Art zu schaffen, bei der eine Migration eines Schmiermittels aus Lagern der Vakuumpumpe in einen pumpaktiven Bereich hinein verhindert oder zumindest verringert wird.

Diese Aufgabe wird durch eine Vakuumpumpe mit den Merkmalen der unabhängigen Ansprüche gelöst. Vorteilhafte Weiterbildungen der Erfindung sind in den Unteransprüchen, der Beschreibung und den Zeichnungen angegeben.

Die Vakuumpumpe weist eine Rotorwelle, die pumpaktive Elemente eines Rotors der Vakuumpumpe trägt, und zumindest ein Lager auf, an welchem die Rotorwelle drehbar gelagert ist. Zur Schmierung des Lagers ist ein Schmiermittel vorgesehen.

Die Rotorwelle weist zumindest eine Ausnehmung auf, die außerhalb eines Lagerbereichs der Rotorwelle angeordnet ist und zum Aufnehmen des Schmiermittels ausgebildet ist. Ferner weist die Rotorwelle eine Drehachse auf, die eine axiale Richtung definiert.

Der Lagerbereich der Rotorwelle ist derjenige räumliche Bereich, in dem das Lager innerhalb der Vakuumpumpe angeordnet ist und mit der Rotorwelle in Verbindung steht, um diese drehbar zu lagern. Innerhalb des Lagerbereichs befindet sich das Schmiermittel wie beispielsweise Öl zur Schmierung des Lagers. Die Ausnehmung kann an einer Außenfläche der Rotorwelle angeordnet sein und sich in einem Bereich in der Nähe des Lagers befinden, auch wenn die Ausnehmung außerhalb des unmittelbaren Lagerbereichs der Rotorwelle angeordnet ist.

Durch die Ausnehmung, bei der es sich um eine Vertiefung oder Aussparung innerhalb der Rotorwelle handeln kann, wird ein zusätzliches Volumen beispielsweise an der Außenfläche der Rotorwelle geschaffen, in das in bestimmten Einbaulagen der Vakuumpumpe das Schmiermittel aufgenommen werden kann, das aus dem Lager gelangt. Durch die Ausnehmung und die Möglichkeit, das Schmiermittel in deren Volumen aufzunehmen, wird folglich verhindert, dass das Schmiermittel weiter in einen Innenraum der Vakuumpumpe gelangt, in welchem sich deren pumpaktive Elemente befinden. Eine unerwünschte Ölmigration in den Innenraum der Vakuumpumpe bzw. in deren Pumpsystem wird folglich durch das Vorhandensein der Ausnehmung verhindert oder zumindest verringert.

Die Ausnehmung ist durch eine Neigung und/oder Verschiebung einer Außenfläche der Rotorwelle gebildet. Eine solche Ausnehmung kann folglich mit geringem Aufwand hergestellt werden, um ein zusätzliches Volumen zur Aufnahme des Schmiermittels zu schaffen. Die Neigung und/oder Verschiebung der Außenfläche der Rotorwelle kann ferner ermöglichen, die Ausnehmung zur Aufnahme des Schmiermittels nachträglich bei existierenden Vakuumpumpen zu bilden.

Die Ausnehmung ist ferner dadurch gebildet, dass die Außenfläche der Rotorwelle bezogen auf eine radiale Richtung geneigt ist, die rechtwinklig zu der axialen Richtung verläuft. Bekannte Vakuumpumpen weisen häufig eine Stirnfläche der Rotorwelle auf, die in der radialen Richtung verläuft, d. h. rechtwinklig zu der Drehachse der Rotorwelle. Im Vergleich zu einer Rotorwelle einer bestehenden Vakuumpumpe bewirkt die Neigung der Außenfläche der Rotorwelle bezogen auf die axiale Richtung, die bei der vorliegenden Ausführungsform vorgesehen ist, dass durch die Neigung eine Vertiefung zum Aufnehmen des Schmiermittels gebildet wird.

Erfindungsgemäß nimmt eine Distanz in axialer Richtung zwischen der Außenfläche der Rotorwelle und dem Lager entlang der zumindest einen Ausnehmung zu, wenn ein Abstand von der Drehachse in der radialen Richtung abnimmt. Mit anderen Worten ist die geneigte Außenfläche in radialer und in axialer Richtung "nach innen" geneigt, d. h. zu der Drehachse der Rotorwelle bzw. zum Innenbereich der Vakuumpumpe hin, um dadurch bei vertikaler Ausrichtung der Drehachse eine Vertiefung in der Rotorwelle zur Aufnahme des Schmiermittels zu bilden. Eine solche Ausgestaltung der Ausnehmung bewirkt, dass das Schmiermittel, das aus dem Lagerbereich austritt, radial nach innen in Richtung der Drehachse bewegt wird und nicht über einen Rand der Stirnfläche der Rotorwelle hinaus in den Bereich der pumpaktiven Elemente hinein migriert.

Ein Neigungswinkel der Außenfläche der Rotorwelle kann daher bezogen auf die radiale Richtung größer als null Grad, aber deutlich kleiner als 90 Grad sein. Ein Neigungswinkel von weniger als etwa zehn Grad bezogen auf die radiale Richtung kann ausreichend sein, um ein genügend großes Volumen zur Aufnahme des Schmiermittels in der Form der Ausnehmung der Rotorwelle zu schaffen.

Gemäß einer Ausführungsform können ein axiales Ende der Rotorwelle und die zumindest eine Ausnehmung in der axialen Richtung auf gegenüberliegenden Seiten des Lagers angeordnet sein. Die Ausnehmung ist bei dieser Ausführungsform folglich bezogen auf das Lager "axial innen" angeordnet, d. h. auf der Seite des Lagers, die den pumpaktiven Elementen des Rotors zugewandt ist. Wenn die Vakuumpumpe in einer Lage positioniert ist, in der die Drehachse der Rotorwelle vertikal verläuft und sich die pumpaktiven Elemente des Rotors unterhalb des Lagers befinden, kann die axial innenliegende Ausnehmung das Schmiermittel aufnehmen, wenn dieses aus dem Lagerbereich der Rotorwelle austritt. Die in vertikaler Richtung darunter liegenden pumpaktiven Elemente können daher gegenüber einer Migration des Schmiermittels geschützt sein.

Die geneigte Außenfläche der Rotorwelle kann zumindest abschnittsweise einen ebenen Verlauf aufweisen. Auf diese Weise kann die Ausnehmung wiederum mit geringem Aufwand hergestellt werden. Ferner kann die Ausnehmung einen abgerundeten Bereich an der Außenfläche der Rotorwelle umfassen. Ein solcher abgerundeter Bereich kann das Volumen weiter vergrößern, das durch die Ausnehmung zur Aufnahme des Schmiermittels bereitgestellt wird. Ferner kann die Außenfläche der Rotorwelle den abgerundeten Bereich an einem in radialer Richtung inneren Ende der Ausnehmung aufweisen. Ein solcher abgerundeter Bereich kann ggf. die Herstellung der Rotorwelle erleichtern und/oder wiederum das Volumen der Ausnehmung vergrößern.

Gemäß einer weiteren Ausführungsform kann die Vakuumpumpe zwei Lager aufweisen, die jeweils in einem Bereich entgegengesetzter Enden der Rotorwelle angeordnet sind und die Rotorwelle jeweils drehbar lagern, wobei ein Schmiermittel wie beispielsweise Öl zur Schmierung des jeweiligen Lagers vorgesehen ist. Die Rotorwelle kann zumindest zwei Ausnehmungen aufweisen, die jeweils einem der zwei Lager zugeordnet sind. Die zwei Lager können beispielsweise an entgegengesetzten axialen Enden der Rotorwelle angeordnet sein, und es kann jeweils eine Ausnehmung angrenzend an das jeweilige Lager bzw. in dessen Nähe angeordnet sein.

Bei dieser Ausführungsform kann jeweils eine der zumindest zwei Ausnehmungen bei einer vertikalen Ausrichtung der Drehachse der Rotorwelle derart positioniert sein, dass sich das der Ausnehmung zugeordnete Lager vertikal oberhalb der Ausnehmung befindet und diese Ausnehmung somit das aus dem Lagerbereich austretende Schmiermittel aufnehmen kann. Dies ermöglicht eine zusätzliche Flexibilität bei der Installation der Vakuumpumpe, da diese bei vertikaler Drehachse der Rotorwelle in mindestens zwei Lagen installiert werden kann, bei denen die Ausrichtung der Drehachse relativ zueinander um 180 Grad gedreht ist. Mit anderen Worten kann bei diesen Lagen jeweils eines der Lager an einem oberen axialen Ende der Drehachse angeordnet sein, während das zweite Lager an dem entgegengesetzten unteren Ende der Rotorwelle angeordnet ist, und umgekehrt.

Die zumindest zwei Ausnehmungen können entlang der Rotorwelle zwischen den zwei Lagern angeordnet sein. Somit befinden sich die zumindest zwei Ausnehmungen bezogen auf das jeweilige Lager axial innen. Dadurch kann bei einer vertikalen Ausrichtung der Drehachse der Rotorwelle stets eine der Ausnehmungen unterhalb eines Lagers angeordnet sein und das aus diesem austretende Schmiermittel aufnehmen.

Gemäß einer weiteren Ausführungsform kann eine zentrale Einlassöffnung der Vakuumpumpe zwischen den zwei Lagern angeordnet sein. Die Vakuumpumpe kann daher als so genannte "doppelflutige" Pumpe ausgebildet sein. Ferner können zwei Auslassöffnungen der Vakuumpumpe jeweils in einem Bereich an zwei Enden der Rotorwelle und zwischen den zwei Lagern angeordnet sein. Bei einer solchen Ausführungsform können jeweilige Ausnehmungen der Rotorwelle jeweils zwischen einer der Auslassöffnungen und einem jeweiligen Lager angeordnet sein. Die jeweiligen Ausnehmungen können somit auch eine Migration des Schmiermittels in den Bereich der Auslassöffnungen verhindern bzw. verringern.

Die Vakuumpumpe kann ferner als Turbomolekularpumpe ausgebildet sein. Da Turbomolekularpumpen für den Hochvakuumbereich vorgesehen sind, kann eine Verhinderung der Migration des Schmiermittels in den Bereich der pumpaktiven Elemente der Turbomolekularpumpe besonders wünschenswert oder sogar für Anwendungen in einer Vakuumanlage notwendig sein.

Das zumindest eine Lager kann ferner als ein Kugellager ausgebildet sein. Kugellager können eine kostengünstige Ausgestaltung der Lager für die Rotorwelle sein.

Die zumindest eine Ausnehmung kann mit einer Einrichtung funktional in Verbindung stehen, die ausgebildet ist, um das Schmiermittel zu dem zumindest einen Lager zurückzuführen. Eine solche Einrichtung kann ein Rückholfilz sein, dessen Enden einerseits in der Nähe der Ausnehmung und andererseits in der Nähe des Lagers angeordnet sind. Die funktionale Verbindung zwischen der Einrichtung zur Rückführung des Schmiermittels und der Ausnehmung kann somit darin bestehen, dass das Schmiermittel bei einer Drehung des Rotors aus der Ausnehmung in Richtung der Einrichtung, beispielsweise gegen einen Rückholfilz, geschleudert wird. Durch eine solche Einrichtung kann somit ermöglicht werden, dass ausgetretenes Schmiermittel nicht in der Ausnehmung bleibt, sondern in den Lagerbereich zurückgebracht wird, sodass die Ausnehmung bereit sein kann, weiteres Schmiermittel aufzunehmen, das aus dem Lagerbereich austreten kann.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: eine Schnittansicht einer Vakuumpumpe,
- Fig. 2: eine Detailansicht von Fig. 1 und
- Fig. 3: eine weitere Detailansicht von Fig. 1.

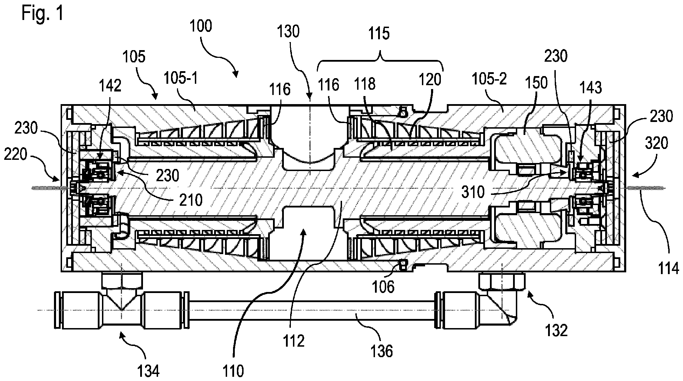

Fig. 1 zeigt eine schematische Schnittansicht einer Vakuumpumpe 100. Die Vakuumpumpe 100 umfasst ein Gehäuse 105, in dem ein Rotor 110 angeordnet ist. Das Gehäuse 105 ist zweiteilig und umfasst einen ersten Abschnitt 105-1 sowie einen zweiten Abschnitt 105-2, die unter Verwendung einer Dichtung 106 miteinander verbunden sind. Der Rotor 110 weist eine Rotorwelle 112 mit einer Drehachse 114 auf, die eine axiale Richtung innerhalb der Vakuumpumpe 100 festlegt.

Die Rotorwelle 112 trägt pumpaktive Elemente des Rotors 110. Die Vakuumpumpe 100 ist als Turbomolekularpumpe ausgebildet und umfasst als pumpaktive Elemente 115 Rotorscheiben 116, Holweckelemente 118 und Holweckhülsen 120.

Die Vakuumpumpe 100 umfasst ferner eine zentrale Einlassöffnung 130, über die ein zu förderndes Gas, das beispielsweise aus einer nicht dargestellten Vakuumkammer stammt, in die Vakuumpumpe 100 gelangt. In einem axialen Bereich an jeweiligen Enden der Rotorwelle 115 weist die Vakuumpumpe 100 ferner eine jeweilige Auslassöffnung 132, 134 auf, über die das zu fördernde Gas die Vakuumpumpe 100 wieder verlässt. Die beiden Auslassöffnungen 132, 134 sind über einen Auslasskanal 136 miteinander verbunden.

Die pumpaktiven Elemente 115 sind nahezu symmetrisch auf beiden Seiten der zentralen Einlassöffnung 130 angeordnet. Das zu fördernde Gas wird dadurch von der Einlassöffnung 130 über die pumpaktiven Elemente 115 zu beiden Auslassöffnungen 132, 134 transportiert. Daher wird die Vakuumpumpe 100 auch als doppelflutige Vakuumpumpe bezeichnet.

Die Rotorwelle 112 ist an ihren jeweiligen axialen Enden 220, 320 bezüglich des Gehäuses 105 an einem jeweiligen Kugellager 142, 143 drehbar gelagert. Das erste Kugellager 142 befindet sich in einem Lagerbereich in der Nähe des axialen Endes 220 der Rotorwelle 112, das einer Antriebsseite der Vakuumpumpe 100 gegenüberliegt. Das zweite Kugellager 143 befindet sich auf der Antriebsseite der Vakuumpumpe 100, auf der ein Elektromotor 150 zum Antreiben der Rotorwelle 112 vorgesehen ist. In den Kugellagern 142, 143 ist für deren Schmierung ein Schmiermittel vorgesehen, wobei als Schmiermittel Öl verwendet wird.

In Fig. 1 ist die Vakuumpumpe 100 in einer horizontalen Lage dargestellt, bei der die Drehachse 114 der Rotorwelle 112 in horizontaler Richtung verläuft. Bei einer Installation an einer nicht dargestellten Vakuumkammer kann die Vakuumpumpe 100 jedoch je nach Anforderungen bezüglich der Umgebung der Vakuumkammer, beispielsweise bezüglich des vorhandenen Bauraums, in unterschiedlichen Lagen mit der Vakuumkammer verbunden werden. Daher kann sich die Vakuumpumpe während ihres Betriebs in einer vertikalen räumlichen Lage befinden, in der entweder das Kugellager 142 oder das Kugellager 143 in vertikaler Richtung an der Oberseite der Vakuumpumpe 100 angeordnet ist. Mit anderen Worten verläuft die Drehachse 114 der Rotorwelle 112 bei einer solchen Ausrichtung der Vakuumpumpe 100 in vertikaler Richtung.

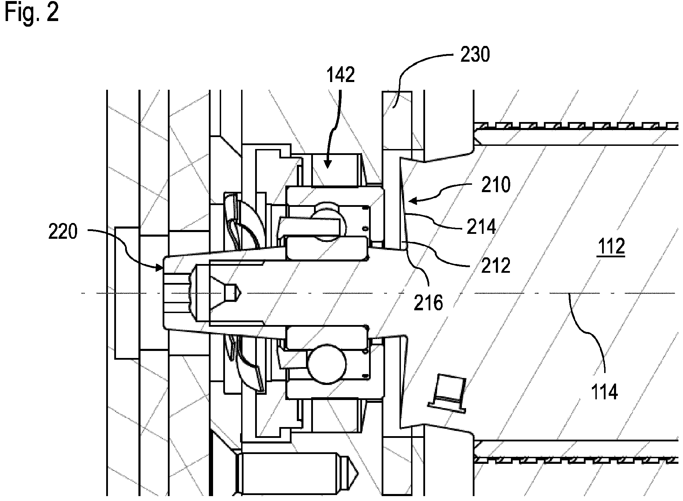

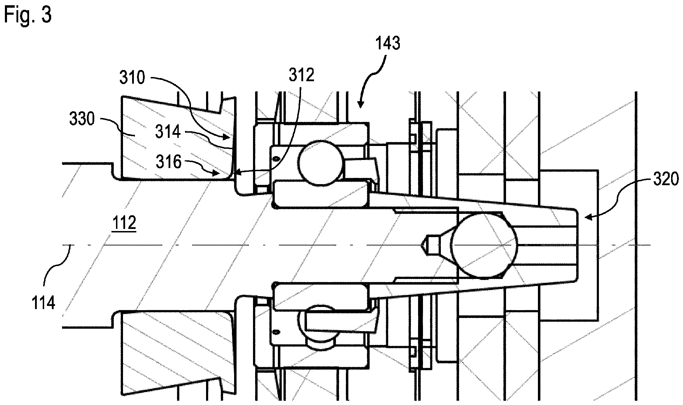

In einer solchen vertikalen Ausrichtung der Vakuumpumpe 100 befindet sich entweder das Kugellager 142 oder das Kugellager 143 vertikal oberhalb einer jeweiligen Stirnfläche 210, 310 (vgl. auch Fig. 2 und Fig. 3) an einem jeweiligen axialen Ende der Rotorwelle 112. In einer solchen vertikalen Ausrichtung der Vakuumpumpe 100 ist ferner eines der beiden Kugellager 142, 143 in vertikaler Richtung oberhalb der pumpaktiven Elemente 115 des Rotors 110 angeordnet.

In Fig. 2 ist der Bereich des Kugellagers 142 vergrößert dargestellt, d. h. der Bereich des in Fig. 1 auf der linken Seite dargestellten axialen Endes 220 der Rotorwelle 112. In Fig. 3 hingegen ist der Bereich des Kugellagers 143 vergrößert dargestellt, der sich auf der Antriebsseite der Vakuumpumpe 100 in der Nähe des axialen Endes 320 der Rotorwelle 112 befindet, das in Fig. 1 auf der rechten Seite dargestellt ist.

Im Bereich des Kugellagers 143 weist die Rotorwelle 112 einen Wuchtring 330 auf (vgl. Fig. 3), der vor der Montage der Vakuumpumpe 100 auf die Rotorwelle 112 gepresst ist. Daher bildet der Wuchtring 330 einen Teil der Außenfläche der Rotorwelle 112. Die Stirnfläche 310 der Rotorwelle 112 wird somit teilweise durch den Wuchtring 330 gebildet.

Wenn die Vakuumpumpe 100 in einer vertikalen räumlichen Lage ausgerichtet ist, in der die Drehachse 114 der Rotorwelle 112 vertikal verläuft, kann Öl aus demjenigen Kugellager 142 oder 143, das sich in vertikaler Richtung an der Oberseite der Vakuumpumpe 100 befindet, aus einem Bereich dieses Kugellagers 142 oder 143 gelangen und auf eine der Stirnflächen 210 oder 310 der Rotorwelle 112 tropfen, die sich in der jeweiligen Einbaulage der Vakuumpumpe 100 unterhalb dieses Kugellagers 142 oder 143 befindet. Das Öls kann vor allem im Stillstand der Vakuumpumpe 100 aus dem entsprechenden Kugellager 142, 143 heraustropfen.

Bei einem erneuten Einschalten der Vakuumpumpe 100 nach deren Stillstand sowie während deren Betrieb wird das Öl, das aus dem Bereich des jeweiligen Kugellagers 142, 143 austritt, gegen einen Rückholfilz 230 geschleudert. Ein jeweiliger Rückholfilz 230 umgibt die beiden axialen Enden 220, 320 der Rotorwelle 112 (vgl. Fig. 1) und umfasst mehrere Filzscheiben bzw. Filzringe, die miteinander verbunden sind und von denen jeweils einer die jeweilige Stirnfläche 210 oder 310 der Rotorwelle 112 umgibt. Durch die kapillare Wirkung der Rückholfilze 230 an beiden axialen Enden 220, 320 der Rotorwelle 112 wird das Öl wieder in den Bereich des jeweiligen Kugellagers 142, 143 zurückgebracht. Eine solche Rückführung des Öls funktioniert jedoch nur dann, wenn dessen Menge einen bestimmten Wert nicht überschreitet und wenn die räumliche Lage der Vakuumpumpe 100 nach deren Ausschalten und vor dem erneuten Einschalten nicht verändert wird.

In einer vertikalen Einbaulage der Vakuumpumpe 100, in der die Drehachse 114 der Rotorwelle 112 in vertikaler Richtung rechtwinklig zum Boden verläuft, kann daher eine Migration des Öls aus einem der Kugellager 142, 143, das sich in dieser Einbaulage an der Oberseite der Vakuumpumpe 100 oberhalb einer der Stirnflächen 210, 310 der Rotorwelle 112 befindet, in den Bereich der pumpaktiven Elemente 115 des Rotors 110 hinein auftreten. Um eine solche Migration des Öls aus dem jeweiligen Kugellager 142, 143 zu verringern oder sogar ganz zu verhindern, weist die Rotorwelle 112 an der jeweiligen Stirnfläche 210, 310 eine jeweilige Ausnehmung 212 (vgl. Fig. 2) bzw. 312 (vgl. Fig. 3) auf. Die Ausnehmung 212, 312 ist dafür vorgesehen, ein zusätzliches Volumen zum Aufnehmen des Öls aus dem darüberliegenden Kugellager 142, 143 bereitzustellen, wenn die Vakuumpumpe 100 in der entsprechenden vertikalen Einbaulage angeordnet ist.

Um die Ausnehmung 212, 312 an der jeweiligen Stirnfläche 210, 310 der Rotorwelle 112 zu bilden, weist ein ebener Abschnitt 214, 314 der jeweiligen Stirnfläche 210, 310 eine Neigung bezüglich einer radialen Richtung auf, die rechtwinklig zu der Drehachse 114 der Rotorwelle 112 verläuft. Die Neigung des ebenen Abschnitts 214, 314 verläuft derart, dass eine Distanz in axialer Richtung zwischen der Stirnfläche 210, 310 bzw. dem ebenen Abschnitt 214, 314 und dem jeweiligen Kugellager 142, 143 zunimmt, wenn der Abstand von der Drehachse 114 in der radialen Richtung abnimmt.

Mit anderen Worten ist der ebene Abschnitt 214, 314 radial nach innen in Richtung der Drehachse 114 der Rotorwelle 112 geneigt, und diese Neigung des ebenen Abschnitts 214, 314 verläuft auch axial nach innen, d.h. in eine Richtung, die den pumpaktiven Elementen 115 des Rotors 110 zugewandt ist. Wenn sich die Vakuumpumpe 100 in einer räumlichen Lage mit vertikaler Drehachse 114 des Rotors 110 befindet, bildet die Ausnehmung 214, 314 somit eine Vertiefung in der Stirnfläche 210, 310 der Rotorwelle 112, die das zusätzliche Volumen zum Aufnehmen des Öls aus den jeweiligen Kugellager 142, 143 bereitstellt.

An einem radial inneren Ende weist die Ausnehmung 212, 312 einen jeweiligen abgerundeten Bereich 216, 316 auf. Der abgerundete Bereich 316 (vgl. Fig. 3) der Stirnfläche 310 bzw. der Ausnehmung 312 ist konvex ausgebildet, indem der Wuchtring 330 radial nach innen abgerundet ist. Durch diese Ausbildung des abgerundeten Bereichs 316 wird das Volumen der Ausnehmung 312 vergrößert.

Das jeweilige axiale Ende 220 bzw. 320 und die jeweiligen Ausnehmungen 210, 212 an den Stirnflächen 210, 310 der Rotorwelle 112 sind in der axialen Richtung jeweils auf gegenüberliegenden Seiten des jeweiligen Kugellagers 142, 143 angeordnet. Die Ausnehmungen 212, 312 befinden sich somit jeweils auf einer axialen Innenseite der Kugellager 142, 143, auf der sich auch die pumpaktiven Elemente 115 des Rotors 110 befinden. Bei einer vertikalen Einbaulage der Vakuumpumpe 100 ist folglich stets eine der Ausnehmungen 212, 312 unterhalb des entsprechenden Kugellagers 142, 143 angeordnet, das sich in dieser Einbaulage an der Oberseite der Vakuumpumpe 100 befindet.

Unabhängig davon, welches der beiden Kugellager 142, 143 bezogen auf die vertikale Richtung oben angeordnet ist, befindet sich eine der beiden Ausnehmungen 212, 312 unterhalb dieses Kugellagers, um jeweils ein zusätzliches Volumen zur Aufnahme von Öl bereitzustellen, das möglicherweise im Stillstand oder bei einer Lageänderung der Vakuumpumpe 100 aus dem entsprechenden Kugellager 142, 143 heraustropft. Dadurch wird eine Migration des Öls aus den Kugellagern 142, 143 in den Bereich der pumpaktiven Elemente 115 für beide vertikalen Einbaulagen der Vakuumpumpe 100 verringert bzw. verhindert, bei denen sich eines der beiden Kugellager 142, 143 an der Oberseite der Vakuumpumpe 100 befindet. Mit anderen Worten wird verhindert, dass in diesen vertikalen Einbaulagen Öl an der Rotorwelle 112 entlang herunterläuft und in den Bereich der pumpaktiven Elemente 115 gelangt, da dieses Öl zuvor in einer der beiden Ausnehmungen 212, 312 aufgefangen wird.

### Bezugszeichenliste

- 100: Vakuumpumpe
- 105: Gehäuse
- 105-1: erster Abschnitt des Gehäuses
- 105-2: zweiter Abschnitt des Gehäuses
- 106: Dichtung
- 110: Rotor
- 112: Rotorwelle
- 114: Drehachse
- 115: pumpaktive Elemente des Rotors
- 116: Rotorscheibe
- 118: Holweckelement
- 120: Holweckhülse
- 130: Einlassöffnung
- 132: Auslassöffnung
- 134: Auslassöffnung
- 136: Auslasskanal
- 142: Kugellager
- 143: Kugellager
- 150: Elektromotor
- 210: Stirnfläche der Rotorwelle
- 212: Ausnehmung
- 214: ebener Abschnitt
- 216: abgerundeter Abschnitt
- 220: axiales Ende der Rotorwelle
- 230: Rückholfilz
- 310: Stirnfläche der Rotorwelle
- 312: Ausnehmung
- 314: ebener Abschnitt
- 316: abgerundeter Abschnitt
- 320: axiales Ende der Rotorwelle
- 330: Wuchtring

## Patentansprüche

1. Vakuumpumpe (100) mit
einer Rotorwelle (112), welche pumpaktive Elemente (115) eines Rotors (110) der Vakuumpumpe (100) trägt, und
zumindest einem Lager (142, 143), an welchem die Rotorwelle (112) drehbar gelagert ist, wobei ein Schmiermittel zur Schmierung des Lagers (142, 143) vorgesehen ist,
wobei die Rotorwelle (112) zumindest eine Ausnehmung (212) aufweist, die außerhalb eines Lagerbereichs der Rotorwelle (112) angeordnet ist und zum Aufnehmen des Schmiermittels ausgebildet ist,
wobei die Ausnehmung (212) durch eine Neigung einer Außenfläche (210) der Rotorwelle (112) gebildet ist,
wobei die Rotorwelle (112) eine Drehachse (114) aufweist, die eine axiale Richtung definiert, und
wobei die Ausnehmung (212) dadurch gebildet ist, dass die Außenfläche (210) der Rotorwelle (112) bezogen auf eine radiale Richtung geneigt ist, die rechtwinklig zu der axialen Richtung verläuft,
**dadurch gekennzeichnet, dass**
eine Distanz in axialer Richtung zwischen der Außenfläche (210) der Rotorwelle (112) und dem Lager (142, 143) entlang der zumindest einen Ausnehmung (212) zunimmt, wenn ein Abstand von der Drehachse (114) in der radialen Richtung abnimmt.

2. Vakuumpumpe (100) mit
einer Rotorwelle (112), welche pumpaktive Elemente (115) eines Rotors (110) der Vakuumpumpe (100) trägt, und
zumindest einem Lager (142, 143), an welchem die Rotorwelle (112) drehbar gelagert ist, wobei ein Schmiermittel zur Schmierung des Lagers (142, 143) vorgesehen ist,
wobei die Rotorwelle (112) eine Drehachse (114) aufweist, die eine axiale Richtung definiert,
**dadurch gekennzeichnet, dass**
die Rotorwelle (112) einen Wuchtring (330) aufweist, der einen Teil einer Außenfläche (310) der Rotorwelle (112) bildet,
wobei der Wuchtring (330) zumindest eine Ausnehmung (312) aufweist, die außerhalb eines Lagerbereichs der Rotorwelle (112) angeordnet ist und zum Aufnehmen des Schmiermittels ausgebildet ist,
die Ausnehmung (312) durch eine Neigung der Außenfläche (310) gebildet ist,
die Ausnehmung (312) dadurch gebildet ist, dass die Außenfläche (310) bezogen auf eine radiale Richtung geneigt ist, die rechtwinklig zu der axialen Richtung verläuft, und
eine Distanz in axialer Richtung zwischen der Außenfläche (310) der Rotorwelle (112) und dem Lager (142, 143) entlang der zumindest einen Ausnehmung (312) zunimmt, wenn ein Abstand von der Drehachse (114) in der radialen Richtung abnimmt.

3. Vakuumpumpe (100) nach Anspruch 1 oder 2, wobei
ein axiales Ende (220, 320) der Rotorwelle (112) und die zumindest eine Ausnehmung (212, 312) in der axialen Richtung auf gegenüberliegenden Seiten des Lagers (142, 143) angeordnet sind.

4. Vakuumpumpe (100) nach einem der Ansprüche 1 bis 3, wobei
die geneigte Außenfläche (210, 310) zumindest abschnittsweise einen ebenen Verlauf (214, 314) aufweist.

5. Vakuumpumpe (100) nach einem der Ansprüche 1 bis 4, wobei
die Ausnehmung (212, 312) einen abgerundeten Bereich (216, 316) an einer Außenfläche (210, 310) umfasst.

6. Vakuumpumpe (100) nach Anspruch 5, wobei
die Ausnehmung (212, 312) in der radialen Richtung ein inneres Ende aufweist und
die Außenfläche (210, 310) den abgerundeten Bereich (216, 316) an dem inneren Ende der Ausnehmung (212, 312) aufweist.

7. Vakuumpumpe (100) nach einem der Ansprüche 1 bis 6, wobei
die Vakuumpumpe (100) zwei Lager (142, 143) aufweist, die in einem Bereich entgegengesetzter Enden (220, 320) der Rotorwelle (112) angeordnet sind und die Rotorwelle (112) jeweils drehbar lagern, wobei ein Schmiermittel zur Schmierung des jeweiligen Lagers (142, 143) vorgesehen ist und
die Rotorwelle (112) zumindest zwei Ausnehmungen (212, 312) aufweist, die jeweils einem der zwei Lager (142, 143) zugeordnet sind.

8. Vakuumpumpe (100) nach Anspruch 7, wobei
die zumindest zwei Ausnehmungen (212, 312) entlang der Rotorwelle (112) zwischen den zwei Lagern (142, 143) angeordnet sind.

9. Vakuumpumpe (100) nach Anspruch 7 oder 8, wobei
eine zentrale Einlassöffnung (130) der Vakuumpumpe (100) zwischen den zwei Lagern (142, 143) angeordnet ist.

10. Vakuumpumpe (100) nach einem der Ansprüche 7 bis 9, wobei
zwei Auslassöffnungen (132, 134) der Vakuumpumpe (100) jeweils in einem Bereich an zwei Enden (220, 320) der Rotorwelle (112) und zwischen den zwei Lagern (142, 143) angeordnet sind.

11. Vakuumpumpe (100) nach einem der Ansprüche 1 bis 10, wobei
die Vakuumpumpe (100) als Turbomolekularpumpe ausgebildet ist.

12. Vakuumpumpe (100) nach einem der Ansprüche 1 bis 11, wobei
das zumindest eine Lager (142, 143) als ein Kugellager ausgebildet ist.

13. Vakuumpumpe (100) nach einem der Ansprüche 1 oder 3 bis 12, wobei
die zumindest eine Ausnehmung (212, 312) mit einer Einrichtung (230) in Verbindung steht, die ausgebildet ist, um das Schmiermittel zu dem zumindest einen Lager (142, 143) zurückzuführen.

## Claims

1. A vacuum pump (100) comprising
a rotor shaft (112) which carries pump-active elements (115) of a rotor (110) of the vacuum pump (100), and
at least one bearing (142, 143) at which the rotor shaft (112) is rotatably supported, wherein a lubricant is provided for lubricating the bearing (142, 143),
wherein the rotor shaft (112) has at least one recess (212) which is arranged outside a bearing region of the rotor shaft (112) and which is configured to receive the lubricant,
wherein the recess (212) is formed by an inclination of an outer surface (210) of the rotor shaft (112),
wherein the rotor shaft (112) has an axis of rotation (114) which defines an axial direction, and
wherein the recess (212) is formed in that the outer surface (210) of the rotor shaft (112) is inclined with respect to a radial direction which extends at a right angle to the axial direction,
**characterized in that**
a distance in the axial direction between the outer surface (210) of the rotor shaft (112) and the bearing (142, 143) increases along the at least one recess (212) when a spacing from the axis of rotation (114) decreases in the radial direction.

2. A vacuum pump (100) comprising
a rotor shaft (112) which carries pump-active elements (115) of a rotor (110) of the vacuum pump (100), and
at least one bearing (142, 143) at which the rotor shaft (112) is rotatably supported, wherein a lubricant is provided for lubricating the bearing (142, 143),
wherein the rotor shaft (112) has an axis of rotation (114) which defines an axial direction,
**characterized in that**
the rotor shaft (112) has a balancing ring (330) which forms a part of an outer surface (310) of the rotor shaft (112),
wherein the balancing ring (330) has at least one recess (312) which is arranged outside a bearing region of the rotor shaft (112) and which is configured to receive the lubricant,
the recess (312) is formed by an inclination of the outer surface (310),
the recess (312) is formed **in that** the outer surface (310) is inclined with respect to a radial direction which extends at a right angle to the axial direction, and
a distance in the axial direction between the outer surface (310) of the rotor shaft (112) and the bearing (142, 143) increases along the at least one recess (312) when a spacing from the axis of rotation (114) decreases in the radial direction.

3. A vacuum pump (100) according to claim 1 or 2, wherein
an axial end (220, 320) of the rotor shaft (112) and the at least one recess (212, 312) are arranged at oppositely disposed sides of the bearing (142, 143) in the axial direction.

4. A vacuum pump (100) according to any one of the claims 1 to 3, wherein the inclined outer surface (210, 310) at least sectionally has a planar course (214, 314).

5. A vacuum pump (100) according to any one of the claims 1 to 4, wherein the recess (212, 312) comprises a rounded region (216, 316) at an outer surface (210, 310).

6. A vacuum pump (100) according to claim 5, wherein
the recess (212, 312) has an inner end in the radial direction, and
the outer surface (210, 310) has the rounded region (216, 316) at the inner end of the recess (212, 312).

7. A vacuum pump (100) according to any one of the claims 1 to 6, wherein
the vacuum pump (100) has two bearings (142, 143) which are arranged in a region of opposite ends (220, 320) of the rotor shaft (112) and which each rotatably support the rotor shaft (112), wherein a lubricant is provided for lubricating the respective bearing (142, 143), and
the rotor shaft (112) has at least two recesses (212, 312) which are each associated with one of the two bearings (142, 143).

8. A vacuum pump (100) according to claim 7, wherein
the at least two recesses (212, 312) are arranged along the rotor shaft (112) between the two bearings (142, 143).

9. A vacuum pump (100) according to claim 7 or 8, wherein
a central inlet opening (130) of the vacuum pump (100) is arranged between the two bearings (142, 143).

10. A vacuum pump (100) according to any one of the claims 7 to 9, wherein two outlet openings (132, 134) of the vacuum pump (100) are each arranged in a region at two ends (220, 320) of the rotor shaft (112) and between the two bearings (142, 143).

11. A vacuum pump (100) according to any one of the claims 1 to 10, wherein the vacuum pump (100) is configured as a turbomolecular pump.

12. A vacuum pump (100) according to any one of the claims 1 to 11, wherein the at least one bearing (142, 143) is configured as a ball bearing.

13. A vacuum pump (100) according to any one of the claims 1 or 3 to 12,
wherein
the at least one recess (212, 312) is in communication with a device (230) which is configured to return the lubricant to the at least one bearing (142, 143).

## Revendications

1. Pompe à vide (100) comprenant
un arbre de rotor (112) qui porte des éléments actifs en pompage (115) d'un rotor (110) de la pompe à vide (100), et
au moins un palier (142, 143) sur lequel l'arbre de rotor (112) est monté de manière rotative, un lubrifiant étant prévu pour lubrifier le palier (142, 143), dans laquelle
l'arbre de rotor (112) présente au moins un évidement (212) disposé à l'extérieur d'une zone de montage de l'arbre de rotor (112) et conçu pour recevoir le lubrifiant,
l'évidement (212) est formé par une inclinaison d'une surface extérieure (210) de l'arbre de rotor (112),
l'arbre de rotor (112) présente un axe de rotation (114) qui définit une direction axiale, et
l'évidement (212) est formé par le fait que la surface extérieure (210) de l'arbre de rotor (112) est inclinée par rapport à une direction radiale perpendiculaire à la direction axiale,
**caractérisée en ce que**
une distance dans la direction axiale entre la surface extérieure (210) de l'arbre de rotor (112) et le palier (142, 143) le long dudit au moins un évidement (212) augmente au fur et à mesure qu'une distance par rapport à l'axe de rotation (114) dans la direction radiale diminue.

2. Pompe à vide (100) comprenant
un arbre de rotor (112) qui porte des éléments actifs en pompage (115) d'un rotor (110) de la pompe à vide (100), et
au moins un palier (142, 143) sur lequel l'arbre de rotor (112) est monté de manière rotative, un lubrifiant étant prévu pour lubrifier le palier (142, 143), l'arbre de rotor (112) présentant un axe de rotation (114) qui définit une direction axiale,
**caractérisée en ce que**
l'arbre de rotor (112) comprend une bague d'équilibrage (330) qui forme une partie d'une surface extérieure (310) de l'arbre de rotor (112),
la bague d'équilibrage (330) présente au moins un évidement (312) disposé à l'extérieur d'une zone de montage de l'arbre de rotor (112) et conçu pour recevoir le lubrifiant,
l'évidement (312) est formé par une inclinaison de la surface extérieure (310),
l'évidement (312) est formé par le fait que la surface extérieure (310) est inclinée par rapport à une direction radiale perpendiculaire à la direction axiale, et
une distance dans la direction axiale entre la surface extérieure (310) de l'arbre de rotor (112) et le palier (142, 143) le long d'au moins un évidement (312) augmente au fur et à mesure qu'une distance par rapport à l'axe de rotation (114) dans la direction radiale diminue.

3. Pompe à vide (100) selon la revendication 1 ou 2,
dans laquelle une extrémité axiale (220, 320) de l'arbre de rotor (112) et ledit au moins un évidement (212, 312) sont disposés sur des côtés opposés du palier (142, 143) dans la direction axiale.

4. Pompe à vide (100) selon l'une des revendications 1 à 3,
dans laquelle la surface extérieure inclinée (210, 310) présente au moins localement un tracé plan (214, 314).

5. Pompe à vide (100) selon l'une des revendications 1 à 4,
dans laquelle l'évidement (212, 312) présente une zone arrondie (216, 316) sur une surface extérieure (210, 310).

6. Pompe à vide (100) selon la revendication 5,
dans laquelle
l'évidement (212, 312) présente une extrémité intérieure dans la direction radiale, et
la surface extérieure (210, 310) présente la zone arrondie (216, 316) à l'extrémité intérieure de l'évidement (212, 312).

7. Pompe à vide (100) selon l'une des revendications 1 à 6,
dans laquelle
la pompe à vide (100) comprend deux paliers (142, 143) qui sont disposés dans une zone d'extrémités opposées (220, 320) de l'arbre de rotor (112) et qui supportent chacun l'arbre de rotor (112) de manière rotative, un lubrifiant étant prévu pour lubrifier le palier respectif (142, 143), et
l'arbre de rotor (112) présente au moins deux évidements (212, 312) associés chacun à l'un des deux paliers (142, 143).

8. Pompe à vide (100) selon la revendication 7,
dans laquelle lesdits au moins deux évidements (212, 312) le long de l'arbre de rotor (112) sont disposés entre les deux paliers (142, 143).

9. Pompe à vide (100) selon la revendication 7 ou 8,
dans laquelle un orifice d'entrée central (130) de la pompe à vide (100) est disposé entre les deux paliers (142, 143).

10. Pompe à vide (100) selon l'une des revendications 7 à 9,
dans laquelle deux orifices de sortie (132, 134) de la pompe à vide (100) sont disposés respectivement dans une zone située au niveau de deux extrémités (220, 320) de l'arbre de rotor (112) et entre les deux paliers (142, 143).

11. Pompe à vide (100) selon l'une des revendications 1 à 10,
dans laquelle la pompe à vide (100) est réalisée sous forme de pompe turbomoléculaire.

12. Pompe à vide (100) selon l'une des revendications 1 à 11,
dans laquelle ledit au moins un palier (142, 143) est réalisé sous forme de roulement à billes.

13. Pompe à vide (100) selon l'une des revendications 1 ou 3 à 12,
dans laquelle ledit au moins un évidement (212, 312) communique avec un organe (230) conçu pour renvoyer le lubrifiant vers ledit au moins un palier (142, 143).
